# EUROPÄISCHE PATENTSCHRIFT

(11) **EP 2 067 826 B1**
(45) Veröffentlichungstag und Bekanntmachung des Hinweises auf die Patenterteilung: **12.02.2014**
(21) Anmeldenummer: 07122410.9
(22) Anmeldetag: 05.12.2007
(51) Int. Cl.: C09C 1/30, C09C 3/04

(54) **Verfahren zur Strukturmodifizierung von Siliziumdioxiden**
Procédé pour la modification structurale de silices
Process for structural modification of silicas

(43) Veröffentlichungstag der Anmeldung: 10.06.2009
(73) Patentinhaber: Evonik Degussa GmbH, 45128 Essen (DE)
(72) Erfinder: Meyer, Jürgen, 63811 Stockstadt (DE); Michael, Günther, 63791 Karlstein (DE); Scholz, Mario, 63584 Gründau (DE)

(56) Entgegenhaltungen:
- EP-A- 0 849 319
- EP-A- 1 801 073
- DE-A1- 1 467 437
- US-B1- 6 193 795

## Beschreibung

Die Erfindung betrifft ein Verfahren zur Strukturmodifizierung von hydrophilem, pyrogen hergestelltem Siliziumdioxid.

Pyrogen hergestelltes Siliziumdioxid ist bekannt aus Ullmann's Enzyklopädie der technischen Chemie, 4. Auflage Band 21, Seite 464 (1982).

Es wird hergestellt durch Flammenhydrolyse von verdampfbaren Siliziumhalogenverbindungen in einer Knallgasflamme.

Es ist bekannt, hydrophobe und hydrophile, pyrogen hergestellte Siliziumdioxide trocken mit einer Kugelmühle zu behandeln, um die Struktur zu modifizieren (EP 0 637 616 A1).

So wird eine hydrophile, pyrogen hergestellte Kieselsäure (Aerosil® 300) mit einer Stampfdichte von 25 g/l in einer Kugelmühle ohne Wasserzusatz strukturmodifiziert. Dabei wird eine Stampfdichte von 308 g/l erzielt (Seite 6, Zeile 38).

Das Siliziumdioxid mit einer Stampfdichte von 308 g/l hat den Nachteil, dass es sich schlecht in polymere Systeme oder Dispersionen, wie Lacken, einarbeiten lässt.

Das Dokument EP 0 637 616 A1 beschreibt nicht die Nachvermahlung von strukturmodifizierten, pyrogen hergestellten Siliziumdioxiden.

Gegenstand der Erfindung ist ein Verfahren zur Strukturmodifizierung von hydrophilen, pyrogen hergestellten Kieselsäuren, welches dadurch gekennzeichnet ist, dass man hydrophile, pyrogen hergestellte Siliziumdioxide mittels Kugelmühle oder einer kontinuierlich arbeitenden Kugelmühle strukturmodifiziert und gegebenenfalls nachvermahlt.Vor und/oder während der Strukturmodifizierung wird dem Siliziumdioxid Wasser zugesetzt. Dies erfolgt in einer Menge von 0,5 bis 5 Gew.-%, bevorzugt 0,5 bis 2 Gew.-%. Sie bewirkt eine niedrigere Verdickungswirkung.

Nach der Strukturmodifizierung ist die DBP-Zahl niedriger beziehungsweise sie kann nicht festgestellt werden.

Durch die Strukturmodifizierung wird der Grindometerwert (Grenzkorn) erhöht. Der erhöhte Grindometerwert wird jedoch während der Nachvermahlung wieder erniedrigt.

Während der Strukturmodifizierung wird die Agglomerationsstruktur der pyrogen hergestellten Kieselsäure größtenteils zerstört. Dies kann aus den Figuren ersehen werden.

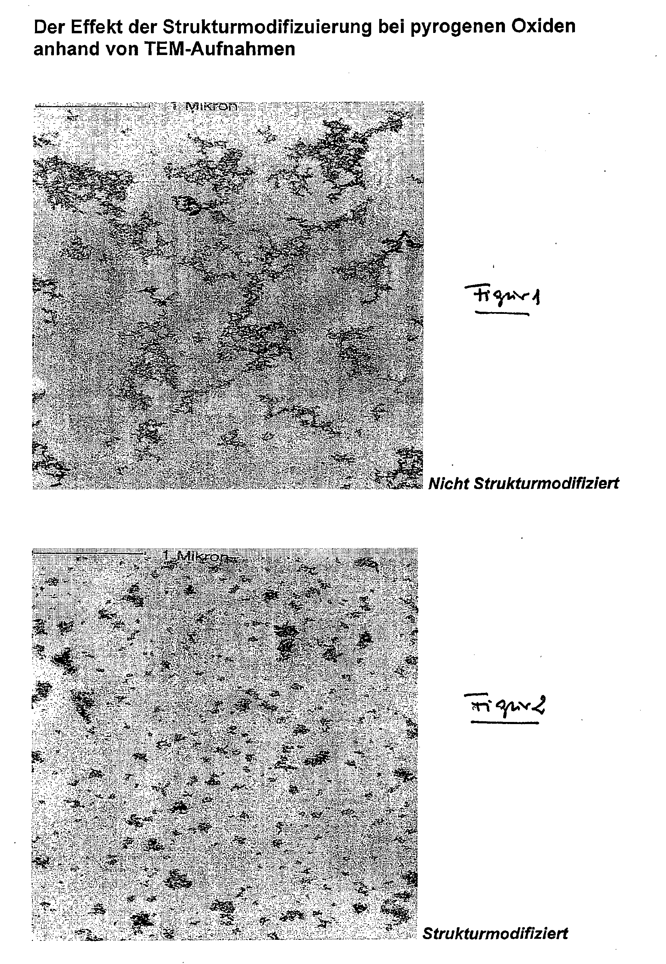

Figur 1 zeigt die ursprüngliche, pyrogen hergestellte Kieselsäure, während Figur 2 die strukturmodifizierte, pyrogen hergestellte Kieselsäure darstellt.

Die strukturmodifizierte, pyrogen hergestellte Kieselsäure weist eine höhere Stampfdichte auf. Die einzelnen verbliebenen Aggregate sind sphärischer. Sie können eine Verdickungswirkung von < 1400 aufweisen. Bei einem Ausgangssiliziumdioxid mit einer BET-Oberfläche von 200 ± 25 m²/g kann die Verdickungswirkung < 1000 betragen. Bei einem Ausgangssiliziumdioxid mit einer BET-Oberfläche von 300 ± 30 m²/g kann die Verdickungswirkung < 1400 sein.

Die Nachvermahlung verringert den Grindometerwert, wobei die Teilchengrößenverteilung zu kleineren Teilchen verschoben wird.

Die erfindungsgemäß nachvermahlenen und strukturmodifizierten Siliziumdioxide können einen Grindometerwert von gleich/kleiner 60 µm, bevorzugt gleich/kleiner 40 µm, aufweisen.

Die nach der Strukturmodifizierung verbliebene Struktur der pyrogen hergestellten Kieselsäure wird durch die Nachvermahlung nicht beeinträchtigt.

Die Nachvermahlung hat kaum Einfluss auf die anwendungstechnischen Eigenschaften der strukturmodifizierten, pyrogen hergestellten Kieselsäure, da der Energieeintrag bei der Nachvermahlung geringer ist als bei der Kugelmühle.

Für die Nachvermahlung können beispielsweise die folgenden Vorrichtungen verwendet werden: Luftstrahlmühle, Zahnscheibenmühle oder Stiftmühle.

Nach der Strukturmodifizierung und/oder Nachvermahlung kann eine Temperung durchgeführt werden. Diese Temperung kann batchweise, zum Beispiel in einem Trockenschrank oder kontinuierlich, zum Beispiel in einem Fließ- oder Wirbelbett erfolgen.

Als hydrophile, pyrogen hergestellte Siliziumdioxide können hydrophile, pyrogen hergestellte Siliziumdioxide eingesetzt werden, die eine BET-Oberfläche von 50 ± 30 bis 380 ± 30 m²/g aufweisen. Besonders bevorzugt können hydrophile, pyrogen hergestellte Siliziumdioxide eingesetzt werden, die eine BET-Oberfläche von 200 ± 25 oder 300 ± 30 m²/g aufweisen.

Ausgehend von einem pyrogen hergestellten, hydrophilen Siliziumdioxid mit einer BET-Oberfläche von 200 ± 25 m²/g kann das erfindungsgemäß strukturmodifizierte Siliziumdioxid eine DBP-Zahl von 160 bis 240 g/100g (DIN 53601) aufweisen.

Ausgehend von einem pyrogen hergestellten, hydrophilen Siliziumdioxid mit einer BET-Oberfläche von 300 ± 30 m²/g kann das erfindungsgemäß strukturmodifizierte Siliziumdioxid eine DBP-Zahl von 180 bis 250 aufweisen.

Der Wassergehalt der als Edukt eingesetzten Siliziumdioxide kann kleiner 1,5 Gew.-% betragen.

Insbesondere können die folgenden in der Tabelle 1 aufgeführten hydrophilen, pyrogen hergestellten Siliziumdioxide eingesetzt werden.

**Tabelle 1**

| | | AEROSIL® 200 | AEROSIL® 300 |
|---|---|---|---|
| CAS-Reg Nummer | | | |
| Verhalten gegenüber Wasser | | | |
| Aussehen | | | |
| Oberfläche nach BET¹⁾ | m²/g | 200 ± 25 | 300 ± 30 |
| Mittlere Größe der Primärteilchen | mm | 12 | 7 |
| Stampfdichte ²⁾ normale Ware verdichtete Ware (Zusatz "V") | g/l | ca. 50 | ca. 50 |
| | g/l | ca. 120 | ca. 120 |
| Trocknungsverlust ³⁾ (2 h bei 105 °C) bei Verlassen des Lieferwerkes | % | < 1,5 | < 1,5 |
| Glühverlust ⁴⁾⁷⁾ (2 h bei 1.000 °C) | % | < 1 | < 2 |
| pH-Wert ⁵⁾ (in 4%iger wäßriger Dispersion) | | 3,7 - 4,7 | 3,7 - 4,7 |
| SiO₂ ⁸⁾ | % | > 99,8 | > 99,8 |
| Al₂O₃ ⁸⁾ | % | < 0,05 | < 0,05 |
| Fe₂O₃ ⁸⁾ | % | < 0,003 | < 0,003 |
| TiO₂ ⁸⁾ | % | < 0,03 | < 0,03 |
| HCl ⁸⁾¹⁰⁾ | % | < 0,025 | < 0,025 |
| Siebrückstand ⁶⁾ (nach Mocker, 45 µm) | % | < 0,05 | < 0,05 |

| | | | |
|---|---|---|---|
| 1) in Anlehnung an DIN 66131 2) in Anlehnung an DIN ISO 787/XI, JIS K 5101/18 (nicht gesiebt) 3) in Anlehnung an DIN ISO 787/II, ASTM D 280, JIS K 5101/21 4) in Anlehnung an DIN 55921, ASTM D 1208, JIS K 5101/23 5) in Anlehnung an DIN ISO 787/IX, ASTM D 1208, JIS K 5101/24 6) in Anlehnung an DIN ISO 787/XVIII, JIS K 5101/20 7) bezogen auf die 2 Stunden bei 105 °C getrocknete Substanz 8) bezogen auf die 2 Stunden bei 1.000 °C geglühte Substanz 9) spezielle vor Feuchtigkeit schützende Verpackung 10) HCl-Gehalt in Bestandteil des Glühverlustes | | | |

Die erfindungsgemäß strukturmodifizierten und nachvermahlenen Siliziumdioxide besitzen niedrigere Grindometerwerte, niedrigere Gritwerte bei niedrigeren Stampfdichten, niedrigeren Verdickungswirkungen und geringerer Struktur (DBP-Werten). Sie lassen sich leicht in die Polymersysteme einarbeiten.

Die erfindungsgemäß strukturmodifizierten Siliziumdioxide können in Kleb- und Dichtstoffsystemen eingesetzt werden.

Kleb- und Dichtstoffsysteme sind bekannt aus Ullmann's Enzyklopädie der technischen Chemie, 4. Auflage, Band 14, Seite 227 (1997).

Sie bestehen aus hochpolymeren Stoffen mit möglichst guten Festigkeitseigenschaften. Die meisten Kleb- und Dichtstoffe enthalten hochmolekulare organische Stoffe als Basisrohstoffe oder reaktive organische Verbindungen, die Vorstufen polymerer Stoffe sind und im Laufe des Kleb- und Dichtprozesses zu Polymeren reagieren.

Es ist bekannt, dass für verschiedene Klebstoff- und Dichtstoffsysteme, zum Beispiel auf Basis ungesättigter Polyesterharze, Polyurethanharze oder Vinylesterharze hydrophile pyrogene Kieselsäuren im Vergleich zu anderen Kieselsäuren sehr wirksame Thixotropiermittel sind (Degussa Schriftenreihe Pigmente (2001) Nr. 27 und Nr. 54).

Nachteiligerweise bewirken pyrogene Kieselsäuren häufig aufgrund ihrer Partikelgrößenverteilung eine Rauhigkeit der Kleb- und Dichtstoffoberfläche, die verbunden mit einer hohen Verdickungswirkung nur geringe Füllgrade zulässt.

Dieser Effekt ist ein signifikanter Nachteil. Aus diesem Grund kann hydrophile, pyrogene Kieselsäure nur begrenzt in Kleb- und Dichtstoffen eingesetzt werden. Insbesondere bei der Anwendung in Gelcoats darf ein solches Verhalten nicht toleriert werden, da der Gelcoat später die Sichtseite einer Formteiloberfläche darstellt. Die hohe Verdickungsleistung lässt nur niedrige Füllgrade zu, so dass die mechanischen Eigenschaften nicht weiter gesteigert werden können.

Bei Kleb- und Dichtstoffsysteme, die dadurch gekennzeichnet sind, dass sie 0,5 Gew.-% bis 20 Gew.-% der erfindungsgemäß strukturmodifizierten hydrophilen und nachvermahlenen pyrogenen Kieselsäure enthalten, treten diese Nachteile, wie Rauhigkeit der Oberfläche und hohe Verdickung, nicht auf.

Die Kleb- und Dichtstoffsysteme können auf Basis ungesättigter Polyesterharze, Epoxidharze, Polyurethan, silanterminierte Polymere, Vinylesterharze, Acrylate, Polyvinylacetat, Polyvinylalkohol, Polyvinylether, EthylenVinylacetat, Ethylen-Acrylsäure-Copolymere, Polyvinylacetate, Polystyrol, Polyvinylchlorid, Styrol-Butadien-Kautschuk, Chloroprenkautschuk, Nitrilkautschuk, Butylkautschuk, Polysulfid, Polyethylen, Polypropylen, fluorierte Kohlenwasserstoffe, Polyamide, gesättigte Polyester und Copolyester, Phenol-Formaldehydharze, Kresol-/Resorzin-Formaldehydharze, Harnstoff-Formaldehydharze, Melamin-Formaldehydharze, Polyimide, Polybenzimidazole oder Polysulfone erhalten worden sein.

Dichtstoffe können nichtmetallische sowohl plastische als auch elastische Werkstoffe mit Adhäsionseigenschaften zum Ausfüllen von Fugen und Hohlräumen zwischen Werkstoffanschlüssen, die nach dem Abbinden an den Werkstofflanken haften und die Fugen gegenüber Umweltmedien abdichten, sein. Die Dichtstoffe können wie die Klebstoffe sowohl physikalisch abbindende oder chemisch härtende (vernetzende) Systeme sein. Dichtstoffe können neben dem Grundpolymer weitere Bestandteile, wie zum Beispiel Weichmacher, Lösemittel (zum Beispiel Ketone), Wasser, Füllstoffe (zum Beispiel Kreide), Thixotropiermittel (zum Beispiel pyrogene Kieselsäure), Haftvermittler (zum Beispiel Silane), Farbpasten (zum Beispiel Pigmentruß), sowie weitere Additive (zum Beispiel Katalysatoren, Alterungsschutzmittel) enthalten.

Klebstoffe können nichtmetallische Stoffe sein, die Fügeteile durch Flächenhaftung und innere Festigkeit (Adhäsion und Kohäsion) verbinden können. Unter Klebstoffen können Produkte verstanden werden, die gemäß ihrer jeweiligen chemischen Zusammensetzung und dem vorliegenden physikalischen Zustand zum Zeitpunkt des Auftragens auf die zu verbindenden Fügeteile eine Benetzung der Oberflächen ermöglichen und in ihrer Klebfuge die für die Kraftübertragung zwischen den Fügeteilen erforderliche Klebschicht ausbilden.

Klebstoffe können wie die Dichtstoffe weitere Komponenten neben dem Grundpolymer, wie zum Beispiel Lösemittel (zum Beispiel Ketone), Wasser, Füllstoffe (zum Beispiel Kreide), Thixotropiermittel (zum Beispiel pyrogene Kieselsäure), Haftvermittler (zum Beispiel Silane), Farbpasten (zum Beispiel Pigmentruß) sowie weitere Additive (zum Beispiel Katalysatoren, Alterungsschutzmittel) enthalten.

Klebstoffe können im Vergleich zu Dichtstoffen höhere Zugscherfestigkeiten und geringere Dehnwerte aufweisen. Das heißt: Klebstoffe können hart bis elastisch und Dichtstoffe elastisch bis plastisch sein.

Ungesättigte Polyesterharze können durch eine Polykondensation von ungesättigten und gesättigten Di- oder Polycarbonsäuren mit Alkoholen erhalten werden. Bei geeigneter Reaktionsführung bleiben die Doppelbindungen in der Säure und/oder dem Alkohol erhalten und ermöglichen auf diese Reaktionen mit ungesättigten Monomeren, zum Beispiel Stryol, nach dem Prinzip der Polymerisation.

Folgende ungesättige Dicarbonsäuren können eingesetzt werden: Maleinsäureanhydrid, Maleinsäure, Fumarsäure.

Gesättigte Dicarbonsäuren können sein: Ortho-Phthalsäure beziehungsweise Ortho-Phthalsäureanhydrid, Isophthalsäure, Therephthalsäure, Tetrahydrophthalsäure, Hexahydrophthalsäure, Adipinsäure, Azelainsäure, Sebazinsäure, Hetsäure, Tetrabromphthalsäure

Folgende Glykole können eingesetzt werden: Propylenglykol-1,2 , Ethylenglykol, Butylenglykol, Neopentylglykol, 2,2,4-Trimethyl-pentandiol-1,3, Dibromneopentylglykol, Diethylenglykol, Triethylenglykol, Dipropylenglykol, Pentaerythritdiallylether, Dicyclopentadien.

Monomere für die Vernetzung können sein: Styrol, Alpha-Methylstryol, Meta- und para-Methylstyrol, Methylmethacrylat, Diallylphthalat, Triallycyanurat

Die Zahl der möglichen Ausgangsstoffe ist mit dieser Aufzählung noch nicht erschöpft. Der Fachmann wird, je nach Rohstofflage, noch andere Verbindungen einsetzen können. Desweiteren ist die Anlagerung von Dicyclopentadien gebräuchlich, wodurch die Reaktivität der Harze modifiziert wird. Die entstandenen sogenannten "ungesättigten Polyesterharze" können als solche oder in Verdünnung mit reaktiven Monomeren Verwendung finden. Reaktive Monomere können Styrol, Stilben, Ester der Acrylsäure, Ester der Methacrylsäure, Diallylphtalat und andere ungesättigte Verbindungen sein, sofern sie eine hinreichend niedrige Viskosität und ausreichende Mischbarkeit mit dem ungesättigten Polyesterharz aufweisen.

Epoxidharze können beispielsweise durch Kondensation von 2,2-Bis-(4-hydroxyphenyl)propan, auch Bishenol A genannt, und Epichlorhydrin in basischem Milieu hergestellt werden. Es entstehen je nach den eingesetzten Äquivalenten beider Edukte Glycidylether mit unterschiedlicher Molmasse. Es können auch Epoxidharze aus Bisphenol F, Novolak-Epoxidharze sowie cycloaliphatische und heterocyklische Epoxidharze eingesetzt werden.

Da Epoxidharze allein schlechte Filmbildner sind, bedarf es einer Molekülvergrößerung durch geeignete Vernetzungsmittel. Als Vernetzungsmittel für Epoxidharze können beispielsweise Polyamine, Polyaminoamide, Carbonsäureanhydride und Dicyandiamide eingesetzt werden.

Als Aminhärter können aliphatische, cycloaliphatische, aroatische und araliphatische Polyamine verwendet werden. Die Aushärtung findet ohne Abspaltung von Reaktionsprodukten statt. Dabei erfolgt in der Regel die Addition eines reaktionsfähigen Wasserstoffatoms an die Epoxidgruppe, wobei eine Hydroxylgruppe entsteht.

Polyurethane, auch Polyisocyanatharze genannt, leiten sich von der Isocyansäure ab. Als eine äußerst reaktionsfreudige Verbindung addiert sie sehr leicht Verbindungen, die über ein aktives (bewegliches) Wasserstoffatom verfügen. Bei dieser Reaktion wird die Doppelbindung zwischen dem Stickstoff und dem Kohlenstoff aufgespalten, wobei der aktive Wasserstoff an den Stickstoff und die R2-O-Gruppe an den Kohlenstoff zu einer Urethangruppe gebunden wird. Um zu höhermolekularen vernetzten Polyurethanen, wie sie für Kleb- und Dichtstoffschichten erforderlich sind, zu gelangen, sind als Reaktionspartner Ausgangsprodukte mit mindestens zwei funktionellen Gruppen, wie Di- oder Triisocyanate, zum Beispiel Diphenylmethan-4,4-diisocyanat (MDI) mit polymeren Anteilen oder Reaktionsprodukt von Toluylendiisocyanat (TDI) und Polyolen), und höherwertige Alkohole (Diole beziehungsweise Polyole, Verbindungen mit mehreren Hydroxylfunktionen im Molekül) vorzusehen. Derartige Alkohole können zum Beispiel auch in Form gesättigter Polyester vorliegen, die mit einem Überschuss von Polyalkoholen hergestellt werden. Zweikomponenten-Reaktionsklebstoffe bestehen aus einem niedrigmolekularen Polyisocyanat und einem gleichfalls verhältnismäßig niedrigmolekularen Polyesterpolyol, zum Beispiel Polyalkylenpolyadipat. Nach der Vereinigung beider Komponenten bilden sich im Klebstoff beziehungsweise in der Klebschicht Urethangruppen.

Einkomponenten-Reaktionsklebstoffe können aus einem höhermolekularen Polyisocyanat-Polyurethan, das mit Luftfeuchte reagiert und so abbindet, bestehen. Im Grunde handelt es sich zwar auch hier um zwei miteinander reagierende chemische Komponenten, der Klebstoffverarbeitung wird aber nur eine physikalische Komponente zugeführt. Da die einfachen niedrigmolekularen Polyisocyanate bei einer Reaktion mit Feuchtigkeit relativ harte und spröde Klebschichten mit niedrigen Festigkeitswerten bilden, geht man bei den Einkomponentensystemen von vorvernetzten Polymeren, sogenannten Prepolymeren, aus. Diese Verbindungen werden aus höhermolekularen Polyolen mit einem stöchiometrischen Überschuß an Isocyanat hergestellt. Auf diese Weise liegen Verbindungen vor, die bereits über Urethanbindungen verfügen, die aber andererseits noch reaktionsfähige Isocyanatgruppen besitzen, die der Reaktion mit Feuchtigkeit zugänglich sind. Die Reaktion mit Wasser verläuft unter Ausbildung einer Harnstoffbindung ab. Die bei der Zerfallsreaktion enstehenden primären Amine setzen sich unmittelbar mit weiteren Isocyanatgruppen zu Polyharnstoffen um. Bei den Einkomponentensystemen liegen im ausgehärteten Polymer demnach sowohl Urethan- als auch Harnstoffverbindungen vor.

Lösemittelhaltige Polyurethanklebstoffe gibt es als physikalische abbindende und chemisch reagierende Systeme. Bei den physikalisch abbindenden Systemen liegt das Polymer als hochmolekulares Hydroxylpolyurethan vor. Als Lösemittel dient zum Beispiel Methylethylketon. Die chemisch reagierenden Systeme beinhalten außer dem Hydroxylpolyurethan noch ein Polyisocyanat als Vernetzer und als zweite Komponente.

Dispersionsklebstoffe enthalten ein hochmolekulares Polyurethan in Wasser dispergiert.

Bei thermisch aktivierbaren Polyurethanklebstoffen liegt die Isocyanatkomponente "verkappt" beziehungsweise "blockiert" in einer Verbindung vor, die die Isocyanatkomponete erst bei höherer Temperatur abspaltet.

Reaktive Polyurethan-Schmelzklebstoffe werden durch Verwendung von höhermolekularen, kristallisierenden und schmelzbaren Diol- und Isocyanatkomponenten hergestellt. Diese werden bei Temperaturen von ca. 70 °C bis 120 °C auf die Fügeteile als Schmelzklebstoffe (Hotmelts) aufgetragen. Nach der Abkühlung (physikalisch abbindend) erhält die Klebung eine ausreichende Anfangsfestigkeit, die eine schnelle Weiterverarbeitung ermöglicht. Anschließend erfolgt dann durch zusätzliche Feuchtigkeitseinwirkung auf die noch vorhandenen reaktionsfähigen Isocyanatgruppen die Vernetzung über Harnstoffbindungen (chemische Reaktion) zu dem Klebschichtpolymer.

Unter den Begriff silanterminierte oder auch silanmodifizierte Polymere fallen alle diejenigen Prepolymere, die an den Kettenenden - oder auch seitenständig - Silylgruppen mit mindestens einer hydrolysierbaren Bindung tragen, im Polymergerüst jedoch nicht die für die Silikone typische Siloxanbindung (SiR₂O)n aufweisen.

Im allgemeinen kann man davon ausgehen, dass jegliches silanmodifiziertes Polymer unabhängig von seiner chemischen Struktur die Eigenschaften eines Hybrids aufweist: Die Härtung erfolgt ähnlich wie bei den Silikonen, und die weiteren Eigenschaften werden durch die verschiedenen möglichen Polymergrundgerüste zwischen den Silylgruppen geprägt. Silanterminierte beziehungsweise silanmodifizierte Polymere lassen sich in ihrem Aufbau zwischen den Polyurethanen und Silikonen einordnen.

Die Synthese des silanmodifizierten Polymers umfasst mehrere Stufen. Ausgangsbasis ist zwei- oder dreiwertiges Polyoxypropylenglykol, welches in die entsprechende Bis-Allylverbindung überführt wird. Diese wird zum gewünschten Endprodukt Bis (3-(methyldimethoxysilyl)propyl)-polyoxypropylen umgesetzt.

Da vernetzen die in die Ketten eingeführten Silylgruppen über Mechanismen, wie sie in der Silikonchemie bekannt sind. Das heißt: Sie reagieren unter Abspaltung geringer Mengen Wasser oder Methanol und ergeben so ein elastisches und unlösliches Netzwerk.

Es gibt noch weitere Methoden wie man zu Dicht- und Klebstoffen auf der Basis silikonmodifizierter Polymere gelangen kann, zum Beispiel die Umsetzung von NCOterminierten Prepolymeren mit entsprechend reaktiven Amino- oder Mercaptosilanen zu den gewünschten Verbindungen. Im "Polymer backbone" können alle nur erdenklichen, sinnvollen Strukturelemente, wie Ether-, Ester-, Thioether-, oder Disulfidbrücken, enthalten sein. Der umgekehrte Fall, bei dem ein NH₂-, SH-, oder OH-terminiertes Prepolymer mit einem Isocyanatsilan umgesetzt werden kann, ist ebenfalls denkbar. Die Addition von endständigen Merkaptogruppen (entweder im Prepolymer oder im Silan) an C-C-Doppelbindungen bietet einen weiteren, technisch interessanten Weg.

Vinylesterharze besitzen von der chemischen Seite her eine gewisse Artverwandtschaft zu den UP-Harzen, betrachtet man beispielsweise Härtungsreaktion, Verarbeitungstechnik und Einsatzgebiet. Es handelt sich hierbei um Polyaddukte aus flüssigen Epoxidharzen und Acrylsäure. Durch Reduzierung von Estergruppen in der Molekülkette sind diese Harze bei gleichzeitig guter Elastizität und Schlagzähigkeit besser hydrolysebeständig. Als Monomere für die Vernetzung werden die gleichen wie bei den ungesättigten Polyesterharzen, insbesondere Styrol, verwendet.

Unter dem Sammelbegriff Klebstoffe auf Acrylatbasis fallen alle Reaktionsklebstoffe, deren Aushärtung über die Kohlenstoff-Kohlenstoff-Doppelbindung der Acryl-Gruppe erfolgt.

Besondere Bedeutung in Klebstoff-Formulierungen haben die Methacrylsäureester und die alpha-Cyanoacrylsäurester erlangt. Die Aushärtung der Acrylat-Klebstoffe erfolgt durch Polymerisation, bei der durch einen Initiator eine Kettenreaktion ausgelöst wird, die zu einer kontinuierlichen von Molekülen (Monomeren) über die Kohlenstoff-Doppelbindung zum ausgehärteten Klebstoff führt. Die Polymerisation der "Acrylat"-Klebstoffe kann durch Radikale (radikalische Polymerisation) ausgelöst werden. Bei alpha-Cyanoacrylaten kann die Polymerisation außerdem auch durch Anionen (anionische Polymerisation) initiiert werden.

Je nachdem, welcher Polymerisationsmechanismus für die Härtung benutzt wird, werden die Acrylat-Klebstoffe auch in folgende Gruppen unterteilt:
- anionisch härtende Klebstoffe: alpha- Cyanoacrylate 1-Komponenten-Klebstoffe
- radikalisch härtende Klebstoffe: anaerobe 1-Komponenten-Klebstoffe
- radikalisch härtende Klebstoffe: 2-Komponenten-Klebstoffe

Bei den Dichtstoffen auf der Grundlage von Polyacrylsäureestern beziehungsweise Acrylsäureestercopolymeren und Polymethacrylsäureestern unterscheidet man zwischen lösemittelhaltigen und wäßrigen Systemen. Polyacrylat-Dichtstoffe härten physikalisch durch Verdunsten des Lösemittels oder des Dispersionswassers.

Polyvinylacetat ist das Polymerisationsprodukt des Vinylacetats. Aufgrund der in dem Molekül vorhandenen stark polaren Acetatgruppe besitzt das Polyvinylacetat sehr gute Haftungseigenschaften auf vielen Fügeteiloberflächen. Eine Verwendung erfolgt vorwiegend als Dispersionsklebstoff mit ca. 50 bis 60 % Festkörpergehalt, zum Teil auch auf Basis von Vinylacetat-Copolmerisaten (zum Beispiel mit Vinylchlorid).

Polyvinylalkohol entsteht als Verseifungsprodukt des Polyvinylacetats und analoger anderer Polyester. Je nach Molekulargewicht liegt der Polyvinylalkohol als mehr oder weniger hochviskose Flüssigkeit vor. Verwendet wird er zum Beispiel zum Kleben cellulosehaltiger Werkstoffe, wie Papier, Pappe, Holz und dergleichen, weiterhin als Schutzkolloid zur Stabilisierung und Erhöhung der Abbindegeschwindigkeit von Dispersionsklebstoffen.

Von den Polyvinylethern sind insbesondere die folgenden drei Polymere als Klebstoffgrundstoffe bevorzugt:
- Polyvinylmethylether
- Polyvinylethylether
- Polyvinylisobutylether

Bei den Polyvinylethern mittlerer Polymerisationsgrade handelt es sich um klebrige Weichharze, die sehr gute Haftungseigenschaften an porösen und glatten Oberflächen besitzen. Der Polyvinylmethylether zeichnet sich besonders dadurch aus, dass er aufgrund seiner Wasserlöslichkeit auch wieder anfeuchtbar ist und somit zum Beispiel im Gemisch mit Dextrin oder tierischen Leimen als Gummierung auf Etikettenpapieren diesen eine verbesserte Haftung verleiht. Wegen ihrer permanenten Klebrigkeit sind Polyvinylether auch in druckempfindlichen Klebstoffen (Haftklebstoffe) im Einsatz.

Ethylenvinylacetate sind Copolymerisate aus Ethylen und Vinylacetat. In dem Molekülaufbau sind die Vinylacetatmoleküle statistisch in die Ethylenkette eingebaut. Während das Polyvinylacetat gegenüber Temperaturbeanspruchung aufgrund von Essigsäureabspaltung relativ instabil ist, sind die Copolymerisate mit Ethylen im Hinblick auf Oxidation und thermischen Abbau wesentlich beständiger. Aus diesem Grunde gehören EVA-Copolmere (bei ca. 40 % Vinylcetatanteil) zu einer wichtigen Gruppe von Schmelzklebrohstoffe.

Ethylen-Acrylsäure-Copolymere sind Copolymerisate aus Ethylen und Acrylsäure beziehungsweise Acrylsäureestern.

Diese Copolmere, die die chemische Resistenz des Polyethylens mit den guten Eigenschaften der Säurebeziehungsweise Estergruppierung in sich vereinigen, stellen wichtige Basispolymere für Schmelzklebstoffe dar. Als Esterkomponente kann vorzugsweise der Acrylsäureethylester eingesetzt werden.

Polyvinylacetale entstehen durch Einwirkung von Aldehyden auf Alkohole. Die für die Klebstoffherstellung wichtigsten Acetale sind das
- Polyvinylformal
- Polyvinylbutyral

Beide dienen als plastifizierende Komponenten für Klebstoffe auf Phenolharzbasis. Das Polyvinylbutyral findet weiterhin Anwendung als Klebfolie in Mehrschichtensicherheitsglas Anwendung.

Polystyrol ist das Polymerisationsprodukt des Styrols.

Das Monomer (Monostyrol) ist als Bestandteil für Klebstoffgrundstoffe vorwiegend in zwei Bereichen im Einsatz:
- als Copolymer mit weichmachenden Monomeren, insbesondere Butadien, für die Herstellung von Styrol-Butadien-Dispersionen,
- als "polymerisationsfähiges" Lösungsmittel für die Copolymerisation mit ungesättigten Polyestern

Polyvinylchlorid ist das Polymerisationsprodukt des Vinylchlorids.

Es kann als Grundstoff, insbesondere für Plastisolklebstoffe, weiterhin als Copolymerisat mit Vinylacetat zu Vinylchlorid/Vinylacetat-Copolymeren in Lösungsmittelklebstoffe, Dispersionsklebstoffen, Heißsiegelklebstoffen und als Hochfrequenz-Schweißhilfsmittel verwendet werden.

Der Styrol-Butadien-Kautschuk ist ein typisches Beispiel für ein thermoplastisches Elastomer, das die Anwendungseigenschaften von Elastomeren mit denen von Thermoplasten vereinigt. Bei dem Styrol-Butadien-Copolymer (SBS) beziehungsweise dem Styrol-Isopren-Copolymer (SIS) handelt es sich um sogenannte Dreiblock-Copolymere, die linear aus aufeinanderfolgenden gleichen Monomereinheiten in einzelnen Blöcken aufgebaut sind. Die Endblöcke sind Polystyrolsegmente, der Mittelblock Polybutadien (Styrol-Butadien-Styrol-Blockcopolmer SBS) oder auch Isopren (Styrol-Isopren-Styrol-Blockpolymer SIS).

Das Verhältnis von Styrol- zu Butadien-(Isopren-) Anteil liegt bei ca. 1:3. Im Gegensatz zu Klebschichtpolymeren, die ihre elastischen Eigenschaften einem Weichmacherzusatz verdanken, wird auf diese Weise eine sogenannte "innere Weichmachung" erreicht. Ein besonderer Vorteil dieser Kautschuk-Copolymerisate ist ihre Fähigkeit, Klebschichten mit guten Haftungseigenschaften und hoher Flexibilität zu bilden. Aus diesem Grunde liegt eine wesentliche Anwendung dort, wo die miteinander verklebten Fügeteile im praktischen Einsatz hohen Verformungsbeanspruchungen unterliegen, zum Beispiel bei Schuhwaren oder Gummi/Gummi-bzw. Gummi/metall-Klebungen.

Der Chloroprenkautschuk (Polychloropren) entsteht als Polymerisations- und Copolymerisationsprodukt des Chloroprens (2-Chlorbutadien). Neben den guten Haftungseigenschaften besitzen die linearen Makromoleküle eine starke Neigung zur Kristallisation, die zu einer relativ hohen Festigkeit der Klebschicht beiträgt. Diese Polymere beziehungsweise Copolymere sind wichtige Grundstoffe für Kontaktklebstoffe. Die im Polychloroprenmolekül vorhandene Doppelbindung ermöglicht es, mit entsprechend reaktiven Molekülgruppen weitere Vernetzungen durchzuführen. Als thermisch härtende Komponenten dienen hierfür Isocyanate und Phenolharze.

Bei Polychloroprenlatizes werden die Basispolymere mit den entsprechenden Zusatzstoffe (klebrigmachende Harze etc.) mittels geeigneter Emulgatoren und /oder Schutzkolloiden in wäßriger Phase dispergiert.

Nitrilkautschuk ist ein Copolymerisat von Butadien mit einem Anteil von ca. 20 bis 40 % Acrylnitril. Der hohe Acrylnitrilanteil verleiht diesen Polymeren eine gute Weichmacherbeständigkeit, so daß sie sich zum Beispiel für das Kleben von weichgemachten Kunststoffen gut eignen.

Butylkautschuk ist ein Copolymerisat aus einem überwiegenden Anteil (< 97 %) von Isobutylen mit Isopren (< 5 %). In diesem linearen Kettenmolekül liegen in Form der langen Polyisobutylensegmente sehr hohe Kettenanteile an gesättigtem Charakter vor, an denen keine weiteren Vernetzungen möglich sind. Die einzige vernetzungsfähige Komponente ist das Isoprenmolekül. Somit werden die Gesamteigenschaften des Butylkautschukes durch den Anteil der durch das Isopren vorgegebenen Zahl an Doppelbindungen bestimmt.

Durch Einbau von chlor- oder bromhaltigen Monomeren kann die Reaktivität weiter beeinflußt werden.

Rohstoffe für Polysulfid-Dichtstoffe sind seit langem unter dem Handelsnamen Thiokol® bekannt. Polysulfid-Polymere werden durch Umsetzung von Dichlorethylformal mit Natriumpolysulfid gewonnen.

Das Molekulargewicht der flüssigen Polymere liegt zwischen 3000 und 4000. Sie lassen sich durch Reaktion mit einem Oxidationsmittel, zum Beispiel Mangandioxid, in einen gummielastischen Endzustand überführen.

Polyethylen wird als Polymerisationsprodukt des Ethylens hergestellt. Die niedrigmolekularen Typen mit Schmelzindizes im Bereich von 2 bis 2000 g/10 min. haben in Kombination mit klebrigmachenden Harzen und Mikrowachsen als Schmelzklebstoffe in der Papier- und Pappenindustrie Einsatz gefunden.

Polypropylen wird als Polymerisationsprodukt des Propylens hergestellt.

Polypropylen ist als Grundstoff für Schmelzklebstoffe mit mittleren Festigkeitseigenschaften im Einsatz und zwar als ataktisches Polypropylen.

Das Polyfluor-Ethylen-Propylen ist ein Copolymer aus Tetrafluorethylen und Hexafluorpropylen und ist als Grundstoff für Schmelzklebstoffe untersucht worden. Der Vorteil dieser Produkte liegt in der hohen Dauertemperaturbelastbarkeit.

Die Polyamide stellen einige der wichtigsten Grundstoffe für die physikalisch abbindenden Schmelzklebstoffe dar. Zur Darstellung der Polyamide sind die im folgenden beschriebenen Umsetzungen, die üblicherweise in der Schmelze unter Stickstoffatmosphäre ablaufen, geeignet:
- Polykondensation von Diaminen mit Dicarbonsäuren
- Polykondensation von Aminocarbonsäuren
- Polykondensation aus Laktamen
- Polykondensation von Diaminen mit dimerisierten Fettsäuren

Gesättigte Polyester und Copolyester entstehen durch Polykondensation aus Dicarbonsäuren und Diolen. Sie sind ein wichtiger Grundstoff für Schmelzklebstoffe.

Phenol-Formaldehydharze-Polymere entstehen durch eine Polykondensationsreaktion zwischen Phenol und Formaldehyd. Es entstehen hochvernetzte Phenolharze, die als Grundstoff für Klebstoffe zum Beispiel für den Flugzeugbau eingesetzt werden. Reine Phenol-Formaldehydharze weisen im allgemeinen eine zu hohe Sprödigkeit auf. Aus diesem Grund werden sie mit thermoplastischen Polymeren durch Copolymerisation oder Mischkondensation modifiziert, zum Beispiel mit:
- Polyvinylformal
- Polyvinylbutyral
- Elastomeren, z.B. Polychloropren und Nitrilkautschuk
- Polyamiden
- Epoxidharzen

Kresol-/Resorzin-Formaldehydharze:

Neben Phenol als Ausgangsmonomer für die Formaldehydkondensationen finden auch Phenolderivate, wie Kresole und Resorzin als Reaktionspartner Verwendung.

Harnstoff-Formaldehydharze werden durch Reaktion stickstoffenthaltender organischer Verbindungen mit Aldehyden hergestellt. Für die Anwendung als Klebstoffe haben insbesondere Harnstoff und Melamin Bedeutung erlangt. Bei den Harnstoff-Formaldehydharzen erfolgt der Reaktionsablauf zunächst in Form einer Additionsreaktion in schwach saurer Lösung. Die eigentliche Polykondensationsreaktion, die zur Ausbildung der polymeren Klebschicht führt, führt entweder über die Ausbildung einer Etherbrücke oder Methylenbrücke zu stark vernetzten Polymeren.

Melamin-Formaldehydharze werden durch Reaktion von Melamin mit Formaldehyd unter Ausbildung von Methylolverbindungen hergestellt. Die Polykondensation verläuft auch bei diesen Verbindungen wie bei den Harnstoffreaktionen über Methylen- oder Methylenether-Verknüpfungen zu nochmolekularen, stark vernetzten, harten und zum Teil spröden Klebschichten.

Polyimide werden als Klebstoffe für hohe Temperaturbeanspruchungen verwendet.

Die Herstellung technisch nutzbarer Polyimide erfolgt durch Umsetzung der Anhydride 4-basischer Säuren, zum Beispiel Pyromellithsäureanhydrid mit aromatischen Diaminen, wie zum Beispiel Diaminodiphenyloxid. Die Anwendung als Klebstoff erfolgt ausgehend von einem Vorkondensat in Form von Lösungen oder Filmen.

Polybenzimidazole sind den hochwärmebeständigen Klebstoffen zuzuordnen. Sie entstehen durch eine Polykondensationsreaktion aus aromatischen Teraminen mit Dicarbonsäure.

Polysulfone gehören in die Gruppe der wärmebeständigen Klebstoffe. Sie werden beispielweise durch eine Polykondensationsreaktion aus Dihydroxydiphenylsulfon mit Bisphenol A erhalten.

### Beispiele

### Beispiele gemäß Erfindung

Das hydrophile, pyrogen hergestellte Siliziumdioxid Aerosil® 200 beziehungsweise das hydrophile, pyrogen hergestellte Siliziumdioxid Aerosil® 300 werden mittels einer Kugelmühle strukturmodifiziert. Dabei wird - wie in der Tabelle 2 angegeben - Wasser hinzugegeben und nachvermahlen.

Die erhaltenen strukturmodifizierten Siliziumdioxide weisen einen höheren Trocknungsverlust als das Ausgangssiliziumdioxid auf.

Die physikalisch-chemischen Daten der erhaltenen strukturmodifizierten, hydrophilen Siliziumdioxide sind in der Tabelle 3 dargestellt.

**Tabelle 2**

| Bezeichnung | **Oxid/Edukt** | **Strukturmodifizierung** | **Teile H₂O/100 Teile Oxid** | **Nachvermahlung *** |
|---|---|---|---|---|
| Vergleichsbeispiel 1 | AEROSIL® 200 | Nein | - | Nein |
| Vergleichsbeispiel 2 | AEROSIL® 300 | Nein | - | Nein |
| Beispiel 1 | AEROSIL® 200 | Ja | 1,0 | Nein |
| Beispiel 2 | AEROSIL® 200 | Ja | 1,5 | Nein |
| Beispiel 3 | AEROSIL® 200 | Ja | 2,0 | Nein |
| Beispiel 4 | AEROSIL® 200 | Ja | 5,0 | Nein |
| Beispiel 5 | AEROSIL® 200 | Ja | 1,0 | ZM |
| Beispiel 6 | AEROSIL® 200 | Ja | 1,0 | LS |
| Beispiel 7 | AEROSIL® 300 | Ja | 1,33 | Nein |
| Beispiel 8 | AEROSIL® 300 | Ja | 3,0 | Nein |
| Beispiel 9 | AEROSIL® 300 | Ja | 3,0 | Nein |
| Beispiel 10 | AEROSIL® 300 | Ja | 2,0 | Nein |
| Beispiel 11 | AEROSIL® 300 | Ja | 1,0 | Nein |
| Beispiel 12 | AEROSIL® 300 | Ja | 1,0 | ZM |
| Beispiel 13 | AEROSIL® 300 | Ja | 1,0 | LS |

| | | | | |
|---|---|---|---|---|
| *: ZM = Zahnscheibenmühle LS = Luftstrahlmühle | | | | |

Physikalisch-chemische Daten der erfindungsgemäß strukturmodifizierten Siliziumdioxide und der Vergleichssiliziumdioxide

**Tabelle 3**

| **Bezeichnung** | **Spezifische Oberfläche nach BET [m²/g]** | **Stampfdichte [g/l]** | **Trocknungsverlust [%]** | **Glühverlust [%]** | **pH-Wert** | **DBP [%]** | **Grindometerwert [µm]** | **Verdickung** |
|---|---|---|---|---|---|---|---|---|
| Vergleichsbeispiel 1 | 202 | 54 | 0,8 | 0,7 | 4,5 | 290 | 28 | 2890 |
| Vergleichsbeispiel 2 | 306 | 50 | 0,5 | 0,8 | 4,0 | 323 | 30 | 2955 |
| Beispiel 1 | 206 | 172 | 1,3 | 0,8 | 4,4 | 219 | 175 | 290 |
| Beispiel 2 | 203 | 184 | 1,8 | 0,8 | 4,5 | 201 | - | - |
| Beispiel 3 | 204 | 179 | 2,1 | 0,8 | 4,5 | 198 | - | - |
| Beispiel 4 | 202 | 189 | 4,6 | 1,0 | 4,6 | 186 | - | - |
| Beispiel 5 | 204 | 142 | 1,3 | 0,8 | 4,7 | 204 | 150 | 350 |
| Beispiel 6 | 203 | 31 | 0,9 | 1,0 | 4,5 | 199 | 30 | 760 |
| Beispiel 7 | 311 | 133 | 1,2 | 1,1 | 4,4 | 232 | - | - |
| Beispiel 8 | 309 | 185 | 2,8 | 1,2 | 5,7 | 197 | - | - |
| Beispiel 9 | 308 | 181 | 3,0 | 1,2 | 4,2 | 215 | - | - |
| Beispiel 10 | 308 | 144 | 2,0 | 1,0 | 4,3 | 227 | - | - |
| Beispiel 11 | 306 | 127 | 1,3 | 1,0 | 4,4 | 230 | 175 | 330 |
| Beispiel 12 | 306 | 117 | 1,1 | 1,1 | 4,4 | 230 | 150 | 310 |
| Beispiel 13 | 307 | 27 | 1,0 | 1,0 | 4,3 | 206 | 50 | 735 |

Die Tabelle 3 zeigt an Hand von verschiedenen physikalisch-chemischen Daten die Auswirkungen der Strukturmodifizierung und der Nachvermahlung auf die hydrophilen, pyrogen hergestellten Siliziumdioxide AEROSIL® 200 und AEROSIL® 300.

Das AEROSIL® 200 besitzt im unbehandelten Zustand eine Oberfläche von 202 m²/g. Diese wird durch die Strukturmodifizierung und die Nachvermahlung nicht beeinflusst oder verändert (siehe Vergleichsbeispiel 1 sowie die Beispiele 1 bis 6).

Die Stampfdichte wird durch die Strukturmodifizierung erhöht. Durch die anschließende Nachvermahlung wird die Stampfdichte jedoch wieder erniedrigt (siehe Beispiele 5 und 6).

Die DBP-Zahl wird durch die Strukturmodifizierung erniedrigt. Sie bleibt jedoch unbeeinflusst von der Nachvermahlung.

Der Grindometerwert wird durch die Strukturmodifizierung erhöht und durch die Nachvermahlung auf den ursprünglichen Wert zurückgeführt, wenn zur Nachvermahlung die Luftstrahlmühle verwendet wird.

Die Verdickungswirkung des hydrophilen, pyrogen hergestellten Siliziumdioxids wird durch die Strukturmodifizierung deutlich erniedrigt, jedoch durch die Nachvermahlung etwas erhöht.

### Grindometerwert

### Grundlagen:

Der Grad der Dispergierung bestimmt die anwendungstechnischen Eigenschaften der mit Aerosil verdickten Flüssigkeit. Die Messung des Grindometerwertes dient zur Beurteilung des Dispergiergrades. Unter dem Grindometerwert versteht man die Grenzschichtdicke, unterhalb derer die vorliegenden Stippen beziehungsweise Aggregate auf der Oberfläche der ausgestrichenen Probe sichtbar werden.

Die Probe wird mit einem Schaber in einer Rinne ausgestrichen, deren Tiefe an einem Ende doppelt so groß ist, wie der Durchmesser der größten Aerosilpartikel und zum anderen Ende stetig bis 0 abnimmt. Auf einer die Tiefe der Rinne angegebenen Skala wird derjenige Wert für die Tiefe in Mikrometer abgelesen, unterhalb dessen eine größere Anzahl von Aerosilpartikel durch Stippen oder Kratzer auf der Oberfläche des Bindemittelsystems sichtbar werden. Der abgelesene Wert ist der Grindometerwert des vorliegenden Systems.

### Geräte und Reagenzien:

Grindometer nach Hegmann mit einem Tiefenbereich von 100-0 Mikrometer.
Dispersion Polyesterharz mit 2 % Aerosil, hergestellt nach Prüfanweisung 0380.

### Die Prüfanweisung lautet wie folgt:

### Geräte und Reagenzien:

Dispermat AE02-C1, VMA-Getzmann (Dispergierscheibe, Durchmesser 5 cm)
Kunststoffbecher, 350 ml, äußerer Durchmesser 8,4 cm passender Kunststoffdeckel
Monostyrollösung (100 g Monostyrol + 0,4 g Paraffin) Palatal® P6-01, DSM Composite Resins
Zentrifuge, Jouan GmbH
Temperierschrank

### Durchführung:

In einen Kunststoffbecher werden 142,5 g Palatal® eingewogen und 7,5 g Aerosil zugewogen; anschließend wird das Aerosil vorsichtig mit dem Dispermat bei etwa 1000 min⁻¹ in das Palatal eingerührt (eventuell anhaftende Aerosilreste an den Becherwänden werden bei abgeschaltetem Dispermat mit Hilfe eines Pinsels in den Becher gebracht) und danach wird 5 min bei 3000 min⁻¹ (Abstand der Dispergierscheibe zum Becherboden ca. 1 mm) dispergiert; dabei wird der Becher mit einem durchbohrten Deckel abgedeckt.

60 g der Dispersion und 27 g Monostyrollösung werden in einen weiteren Kunststoffbecher mit 63 g Palatal® P6 gegeben und mit dem Dispermat 3 min bei 1500 min⁻¹ dispergiert (Becher abgedeckt).

Es ergibt sich eine Konzentration von 2 % Aerosil im Endgemisch, das 18 % Monostyrol enthält.

Zur Entfernung von Luftbläschen wird der Kunststoffbecher verschlossen in einer Laborzentrifuge 2,5 min bei 2500 min⁻¹ zentrifugiert. Die Dispersion bleibt 1 h 50 min im abgedeckten Becher im Temperierschrank bei 22 °C stehen.

### A. Herstellung einer Mischung von ungesättigten Polyesterharzen mit Kieselsäure als Füllstoff

Mit der hier beschriebenen Arbeitsanweisung werden Mischungen von hydrophilen AEROSIL®-Typen und ungesättigten Polyesterharzen hergestellt, um die Körnigkeit und das Verdickungsvermögen der Kieselsäuren zu charakterisieren.

### Formulierung

| | |
|---|---|
| 98 % Palatal A 410 | (von BÜFA) |
| 2 % Kieselsäure | |

205,8 g Palatal A 410 und 4,2 g Kieselsäure werden in einem PE-Becher eingewogen und die Dissolverscheibe vollständig eingetaucht. Dann wird die Kieselsäure bei einer Geschwindigkeit n1 = 1000 min ⁻¹ bei geschlossenem Deckel homogenisiert (eingearbeitet). Sobald die Kieselsäure vollständig eingearbeitet ist, wird die Geschwindigkeit auf n2=3000 min ⁻¹erhöht und 5 Minuten dispergiert. Anschließend wird die Mischung im Vakuumschrank entlüftet und mindestens 90 Minuten in einem Wasserbad bei 25°C gelagert.

### B. Messung der Viskosität von Harzen mit Kieselsäure als Füllstoff

Harze (z.B. Polyesterharz, UP-Harz, Vinylesterharz) enthalten im allgemeinen zur Verbesserung der anwendungstechnischen Eigenschaften Füllstoffe. Je nach Einsatzgebiet beeinflussen Art und Konzentration des verwendeten Füllstoffs das rheologische Verhalten des Harzes. Es wird ein Rheometer vom Typ Brookfield DV III verwendet. Mit einem Spatel wird die Mischung 1 min lang im Aufbewahrungsbehälter homogenisiert. Dabei sollten keine Blasen entstehen. Anschließend wird die Mischung in einen 180 ml Becher gefüllt, bis er fast voll ist. Ohne Verzögerung wird der Meßkopf des Rheometers in die Mischung vollständig eingetaucht und wie folgt gemessen:

| | | |
|---|---|---|
| 5 Upm | Wert ablesen nach | 60 s |
| 50 Upm | Wert ablesen nach | 30 s |

Die abgelesenen Werte sind die Viskositäten [Pa*s] bei den jeweiligen Upm.

### C. Bestimmung des Grindometerwertes nach DIN 53 203

### Prüfgerät

Es wird ein Grindometerblock nach Hegmann verwendet.

### Durchführung der Messungen

Der Grindometerblock wird auf eine ebene, rutschsichere Fläche gelegt und unmittelbar vor der Prüfung sauber abgewischt. Dann wird eine blasenfreie Probe an der tiefsten Stelle der Rinne so eingefüllt, dass sie etwas über den Rand der Rinne hinwegfliest. Der Schaber wird nun mit beiden Händen gefasst und senkrecht zum Grindometerblock und im rechten Winkel zu seiner Längskante mit leichtem Druck auf das tiefe Ende der Rinne aufgesetzt. Dann wird die Probe durch langsames, gleichmäßiges Ziehen des Schabers über den Block in die Rinne ausgestrichen. Spätestens 3 Sekunden nach dem Abstreifen der Probe wird die Körnigkeit abgelesen.

Die Oberfläche der Probe wird quer zur Rinne schräg von oben (unter einem Winkel von 20-30° zur Fläche) betrachtet. Dabei wird der Block so zum Licht gehalten, daß die Oberflächenstruktur der Probe gut zu erkennen ist.

Auf der Skala wird als Körnigkeit der Wert in Mikrometer festgestellt, unterhalb dessen eine größere Anzahl von Kieselsäure-Körnern al Stippen oder Kratzer auf der Oberfläche sichtbar wird. Einzelne, zufällig aufgetretene Stippen oder Kratzer werden dabei nicht berücksichtigt.

Die Körnigkeit wird mindestens zweimal beurteilt, und zwar jeweils an einer neu ausgestrichenen Dispersion.

### Auswertung:

Aus den Messwerten wird der arithmetische Mittelwert gebildet.
Zwischen dem Grindometerwert in Mikrometer und den auf dem Zollsystem basierenden Hegmann-Einheiten und FSPT-Einheiten besteht folgender Zusammenhang:
B = 8 -0.079 A
C = 10 -0.098 A = 1,25B

### Hierin bedeuten:

A = Grindometerwert in Mikrometer
B = Grindometerwert in Hegmann-Einheiten
C = Grindometerwert in FSPT-Einheiten

### Beispiele: Nach den Verfahren A, B und C werden die Kieselsäuren im ungesättigten Polyesterharz eingearbeitet, die Viskosität (Tabelle 4) und der Grindometerwert (Tabelle 5) bestimmt.

**Tabelle 4**

| **Beispiel** | **Kieselsäure** | **Spindel Nr.** | **Viskosität (mPa s)** | |
|---|---|---|---|---|
| | | | **5 rpm** | **50 rpm** |
| 14 | 4,2 g / 2% gemäß Beispiel 11 | 4 | 2120 | 1780 |
| 15 | 4,2 g / 2% gemäß Beispiel 12 | 4 | 2160 | 1840 |
| 16 | 4,2 g / 2% gemäß Beispiel 13 | 4 | 4920 | 2476 |
| 17 | 4,2 g / 2% gemäß Beispiel 1 | 4 | 2080 | 1796 |
| 18 | 4,2 g / 2% gemäß Beispiel 5 | 4 | 2120 | 1820 |
| 19 | 4,2 g / 2% gemäß Beispiel 6 | 4 | 4920 | 2456 |
| 20 | 4,2 g / 2% Aerosil® 200 | 5 | 13280 | 4320 |
| 21 | 4,2 g / 2% Aerosil® 300 | 5 | 13200 | 4480 |

Die erfindungsgemäßen Kieselsäuren zeigen gegenüber den Vergleichskieselsäuren eine sehr niedrige Verdickung, so dass leicht höhere Füllgrade erreicht werden können (siehe Tabelle 5).

**Tabelle 5**

| **Beispiel** | **Kieselsäure** | **Spindel Nr.** | **Viskosität (mPa s)** | |
|---|---|---|---|---|
| | | | **5 rpm** | **50 rpm** |
| 22 | 16g / 7,2% gemäß Beispiel 11 | 6 | 19600 | 6280 |
| 23 | 16g / 7,2% gemäß Beispiel 12 | 6 | 22200 | 6880 |
| 24 | 10g / 4,6% gemäß Beispiel 13 | 6 | 22800 | 6200 |
| 25 | 16g / 7,2% gemäß Beispiel 1 | 6 | 20400 | 6300 |
| 26 | 16g / 7,2% gemäß Beispiel 5 | 6 | 21400 | 6480 |
| 27 | 10g / 4,6% gemäß Beispiel 6 | 6 | 22000 | 6020 |

**Tabelle 6**

| **Beispiel** | **Kieselsäure** | **Grindometerwert in µm** |
|---|---|---|
| 28 | 2 % gemäß Beispiel 11 | 193 |
| 29 | 2 % gemäß Beispiel 13 | 33 |
| 30 | 2 % gemäß Beispiel 1 | 186 |
| 31 | 2 % gemäß Beispiel 5 | 34 |
| 32 | 2 % Aerosil® 200 | 57 |
| 33 | 2 % Aerosil® 300 | 68 |

Die Kieselsäuren, die zusätzlich nachvermahlen wurden, zeigen einen sehr niedrigen Grindometerwert, der zudem auch deutlich niedriger liegt als bei Standardmaterialien wie AEROSIL® 200 und AEROSIL® 300.

Die Beispiele zeigen überraschenderweise bei niedriger Verdickung deutlich niedrigere Grindometerwerte und damit keine Rauhigkeiten der Oberfläche.

## Patentansprüche

1. Verfahren zur Strukturmodifizierung von hydrophilen, pyrogen hergestellten Siliziumdioxiden , **dadurch gekennzeichnet, dass** man hydrophile, pyrogen hergestellte Siliziumdioxide mittels einer Kugelmühle strukturmodifiziert , wobei vor und/oder während der Strukturmodifizierung Wasser in einer Menge von 0,5 bis 5 Gew.-%, bevorzugt 0,5 bis 2 Gew.-%, hinzugegeben wird und gegebenenfalls wenigstens ein weiterer Schritt aus der Gruppe bestehend aus Nachvermahlung mittels Luftstrahl-, Zahnscheiben- oder Stiftmühle und Temperung durchgeführt wird.

2. Verfahren nach Anspruch 1, **dadurch gekennzeichnet, dass** das Wasser vor der Strukturmodifizierung zugegeben wird.

3. Verfahren nach Anspruch 1, **dadurch gekennzeichnet, dass** das Wasser während der Strukturmodifizierung zugegeben wird.

4. Verfahren nach Anspruch 1, **dadurch gekennzeichnet, dass** das Wasser vor und während der Strukturmodifizierung zugegeben wird.

5. Verfahren nach den Ansprüchen 1 bis 4, **dadurch gekennzeichnet, dass** nach der Strukturmodifizierung nachvermahlen wird.

6. Verfahren nach den Ansprüchen 1 bis 4, **dadurch gekennzeichnet, dass** nach der Strukturmodifizierung getempert wird.

7. Verfahren nach den Ansprüchen 1 bis 4, **dadurch gekennzeichnet, dass** nach der Strukturmodifizierung nachvermahlen und getempert wird.

## Claims

1. Process for the structural modification of hydrophilic fumed silicas, **characterized in that** hydrophilic fumed silicas are structurally modified by means of a ball mill, and water is added before and/or during structural modification, in an amount of 0.5% to 5% by weight, preferably 0.5% to 2% by weight, and optionally at least one further step is carried out, from the group consisting of regrinding by means of air-jet mill, toothed-disk mill or pinned-disk mill, and heat treatment.

2. Process according to Claim 1, **characterized in that** the water is added before the structural modification.

3. Process according to Claim 1, **characterized in that** the water is added during the structural modification.

4. Process according to Claim 1, **characterized in that** the water is added before and during the structural modification.

5. Process according to Claims 1 to 4, **characterized in that** regrinding takes place after the structural modification.

6. Process according to Claims 1 to 4, **characterized in that** heat treatment takes place after the structural modification.

7. Process according to Claims 1 to 4, **characterized in that** regrinding and heat treatment take place after the structural modification.

## Revendications

1. Procédé pour la modification de structure de dioxydes de silicium hydrophiles, préparés par voie pyrogène, **caractérisé en ce qu'**on modifie en structure des dioxydes de silicium hydrophiles, préparés par voie pyrogène au moyen d'un broyeur à billes, en ajoutant, avant et/ou pendant la modification de structure, de l'eau en une quantité de 0,5 à 5% en poids, de préférence de 0,5 à 2% en poids, et en réalisant le cas échéant au moins une autre étape du groupe constitué par un post-broyage au moyen d'un broyeur à jet d'air, à disque denté ou à broches et un traitement thermique.

2. Procédé selon la revendication 1, **caractérisé en ce que** l'eau est ajoutée avant la modification de structure.

3. Procédé selon la revendication 1, **caractérisé en ce que** l'eau est ajoutée pendant la modification de structure.

4. Procédé selon la revendication 1, **caractérisé en ce que** l'eau est ajoutée avant et pendant la modification de structure.

5. Procédé selon les revendications 1 à 4, **caractérisé en ce qu'**on effectue un post-broyage après la modification de structure.

6. Procédé selon les revendications 1 à 4, **caractérisé en ce qu'**on effectue un traitement thermique après la modification de structure.

7. Procédé selon les revendications 1 à 4, **caractérisé en ce qu'**on effectue un post-broyage et un traitement thermique après la modification de structure.
